Europäisches Patentamt

European Patent Office

Office européen des brevets

(11) Veröffentlichungsnummer: **0 118 722**
**B1**

(12) **EUROPÄISCHE PATENTSCHRIFT**

(45) Veröffentlichungstag der Patentschrift:
14.05.86

(51) Int. Cl.⁴: **A 24 F  19/06**, B 60 N  3/08

(21) Anmeldenummer: **84101029.1**

(22) Anmeldetag: **02.02.84**

(54) **Kippaschter, insbesondere für Fahrzeuge.**

(30) Priorität: **11.02.83  DE 3304753**

(43) Veröffentlichungstag der Anmeldung:
**19.09.84 Patentblatt 84/38**

(45) Bekanntmachung des Hinweises auf die Patenterteilung:
**14.05.86 Patentblatt 86/20**

(84) Benannte Vertragsstaaten:
**BE DE FR GB IT NL SE**

(56) Entgegenhaltungen:
**DE - A - 2 006 812**
**DE - A - 2 412 451**
**DE - A - 2 934 661**
**FR - A - 1 310 328**
**FR - A - 2 149 967**

(73) Patentinhaber: **Gebr. Happich GmbH,**
**Postfach 10 02 49 Clausenbrücke 1,**
**D-5600 Wuppertal 1 (DE)**

(72) Erfinder: **Dabringhaus, Volker, Erkratherstrasse 63,**
**D-5600 Wuppertal 11 (DE)**
Erfinder: **Wegel, Peter, Leimbacherstrasse 73,**
**D-5600 Wuppertal 2 (DE)**

ACTORUM AG

## Beschreibung

Die Erfindung bezieht sich auf einen Kippascher der im Oberbegriff des Anspruchs 1 angegebenen Art.

Kippascher der gattungsgemässen Art, wie sie z. B. in der DE-A-20 06 811 beschrieben sind, besitzen im allgemeinen einen Aufbau, der es zulässt, den Ascherkasten gegen die Kraft der ihn belastenden Feder anzuheben und, da dadurch die das Scharniergelenk bildende Verhakung getrennt wird, aus dem Aschergehäuse herauszuziehen. Während es bei privat genutzten Fahrzeugen als vorteilhaft empfunden wird, wenn der Ascherkasten besonders einfach dem Aschergehäuse entnommen werden kann, liegen die Verhältnisse völlig anders, wenn es sich um Ascher handelt, die in Omnibussen, Taxen od. dgl. eingebaut sind, weil die Erfahrung gezeigt hat, dass hier die Ascherkästen sehr oft abhanden kommen. Die DE-A-22 58 635 beschreibt zwar einen Kippascher in einer diebstahlsicheren Ausführung, bei der allerdings in Kauf genommen wird, dass der Ascherkasten nicht völlig von dem Aschergehäuse getrennt werden kann, was aber Erschwernisse beim Entleeren und beim Säubern des Aschers mit sich bringt.

DE-A-24 12 451 beschreibt einen Kippascher, wobei in der geschlossenen Stellung des Kippaschers eine zwischen einer Seitenwand des Aschergehäuses und der dieser benachbarten Seitenwand des Ascherkastens angeordnete Führungseinrichtung eine Herausnahme des Ascherkastens aus dem Aschergehäuse verhindert.

Die Erfindung liegt nun die Aufgabe zugrunde, einen Kippascher der eingangs genannten Art so zu gestalten, dass zwar einerseits eine vollständig aus dem Aschergehäuse herausnehmbare Anordnung für den Ascherkasten gewährleistet ist, jedoch andererseits die Herausnahme des Ascherkastens aus dem Aschergehäuse nur unter erschwerten Bedingungen möglich ist.

Zur Lösung dieser Aufgabe ist erfindungsgemäss vorgesehen, dass zwischen zumindest einer Seitenwand des Aschergehäuses und der dieser benachbarten Seitenwand des Ascherkastens eine Führungseinrichtung angeordnet ist, welche aus einer konzentrisch zur Gleitbahn angeordneten weiteren Gleitbahn und einem darauf geführten Gleitnocken besteht, wobei diese wahlweise am Aschergehäuse oder am Ascherkasten angeordnete weitere Gleitbahn zwischen ihren Enden eine eine Aufnahme des Gleitnockens entgegen der Kraft der Feder ermöglichende radial ausgerichtete Aussparung aufweist.

Durch diese erfindungsgemässe Massnahme ist eine einfache, zerstörungsfreie Herausnahme des Ascherkastens aus dem Aschergehäuse nur in einer bestimmten Schwenklage des Ascherkastens, nämlich in der, in der sich der Gleitnocken in Höhe der Aussparung befindet, möglich, wodurch ein Entwenden des Ascherkastens oder eine Herausnahme durch Unbefugte beträchtlich erschwert ist, zumal sich die Ascherkästen bei herkömmlichen Aschern üblicherweise nur dann ausrasten lassen, wenn sie sich in der Stellung der grössten Öffnungsweite befinden.

Um die Herausnahme des Ascherkastens aus dem Aschergehäuse für hierzu befugte Personen zu erleichtern, ist gemäss einer vorteilhaften Weiterbildung der Erfindung vorgesehen, dass die erste Gleitbahn zwischen ihren Enden eine ein lösbares Einrasten der Feder ermöglichende radiale Aussparung für die Begrenzung einer Zwischenöffnungsweite des Ascherkastens aufweist. Die Winkelstellung, die der Ascherkasten bei der Zwischenöffnungsweite einnimmt, ist zweckmässigerweise so gewählt, dass dabei der Gleitnocken der Aussparung unmittelbar gegenüberliegt.

Nach einer weiteren Ausgestaltung der Erfindung weist der Ascherkasten vorzugsweise an seinen beiden Seitenwänden eine weitere Gleitbahn auf, während das Aschergehäuse mit zwei Gleitnocken ausgebildet ist. Die Anordnung einer Gleitbahn an jeder Seitenwand des Ascherkastens erhöht die Zuverlässigkeit der Zwangsführung und stellt sicher, dass der Ascherkasten nicht verkantet oder einseitig aus seiner Verankerung gelöst werden kann.

Schliesslich ist der Erfindung zufolge vorgesehen, dass die bzw. jede weitere Gleitbahn einendig einen unüberwindbaren Endanschlag für die Begrenzung der grössten Öffnungsweite des Ascherkastens aufweist, so dass die den Ascherkasten belastende Feder insoweit entlastet ist und ihr lediglich die Aufgabe zufällt, den Ascherkasten in jeder Schwenklage klapperfrei zu haltern.

Im folgenden wird ein Ausführungsbeispiel der Erfindung anhand der Zeichnung näher erläutert. Es zeigen

Fig. 1 einen Querschnitt durch den Kippascher mit im Aschergehäuse angeordneten Ascherkasten,

Fig. 2 einen zweiten Querschnitt durch den Kippascher, wobei der Ascherkasten in einer Position dargestellt ist, die seine Herausnahme aus dem Aschergehäuse erlaubt, und

Fig. 3 eine Frontansicht des Kippaschers, teilweise im Schnitt.

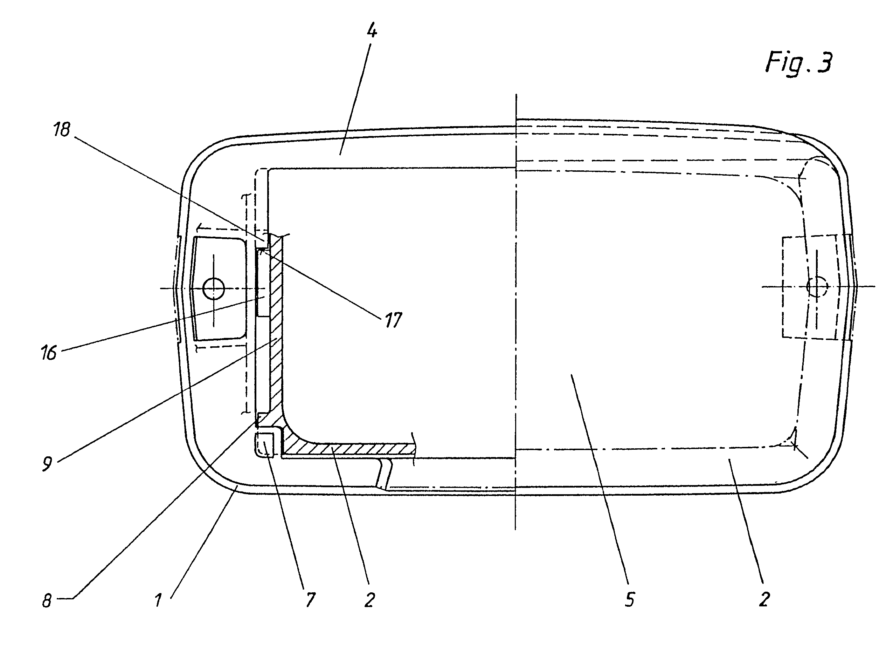

Der neue Kippascher besteht aus einem Aschergehäuse 1 und einem Ascherkasten 2. Das Aschergehäuse 1 weist eine frontseitige Öffnung 3 zum Einführen und zum Herausnehmen des Ascherkastens 2 und weiterhin einen vorderen Rahmen 4 auf, gegen die Frontplatte 5 des Ascherkastens 2 zur Anlage kommt. Der Ascherkasten 2 ist über eine ein Scharniergelenk 6 bildende Verhakung lösbar an dem Aschergehäuse 1 angelenkt. Das Scharniergelenk 6 bzw. die Verhakung besteht aus einem dem Aschergehäuse 1 zugeordneten Steg 7, dessen Wirkfläche in einem Radius verläuft, und einer dem Ascherkasten 2 zugeordneten klauenartigen Leiste 8. Der Steg 7 und die Leiste 8 können sich über die gesamte Kippascherlänge erstrecken oder, vorzugsweise wie in Fig. 3 dargestellt, nur in den Eckbereichen vorgesehen sein.

Die freien oberen Randkanten der Seitenwände 9 des Ascherkastens 2 sind dem Schwenkradius des Ascherkastens 2 entsprechend bogenförmig ausgebildet und dienen jeweils als Gleitbahn 10 für eine darauf aufliegende Feder 11, durch welche der Ascherkasten 2 in Richtung des Scharniergelenks 6 belastet ist. Die Federn 11 sind als Blattfedern ausgeführt, am Aschergehäuse 1 in geeigneter Weise z. B. durch einen Niet 12 befestigt und weisen an ihrem freien der Öffnung 3 zugewandten Endbereich einen unmittelbar auf der Gleitbahn 10 aufliegenden Nocken 13 auf. Die Gleitbahn 10 ist mit Rastaussparungen 14 für die geöffnete und geschlossene Endstellung des Ascherkastens 2 sowie zwischen ihren Enden etwa mittig mit einer weiteren radialen Aussparung 15 ausgebildet, welch letztere ein Einrasten des Federnockens 13 für die Begrenzung einer Zwischenöffnungsstellung des Ascherkastens 2 ermöglicht.

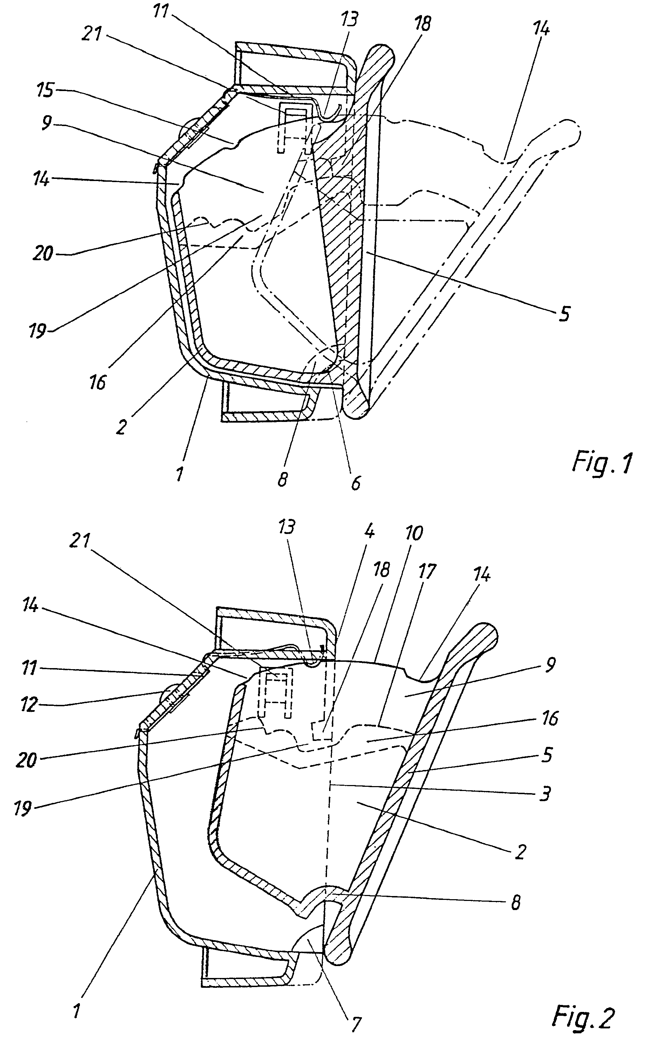

Damit nun der Ascherkasten 2 nicht ohne weiteres aus dem Aschergehäuse 1 entnommen werden kann, sind an den Aussenflächen der Ascherkastenseitenwände 9 vorspringende Materialansätze 16 vorgesehen, vorzugsweise angeformt, deren oben liegende Randkanten jeweils eine weitere konzentrisch zur Gleitbahn 10 angeordnete Gleitbahn 17 bilden. Auf diesen weiteren Gleitbahnen 17, die einendig durch die Frontplatte 5 und anderendig durch einen Endanschlag 20 für die grösste Öffnungsweite des Ascherkastens 2 begrenzt sind, ist jeweils ein ortsfest am Aschergehäuse 1 angeordneter bzw. einstückig angeformter Gleitnocken 18 geführt. Jede weitere Gleitbahn 17 weist zwischen ihren Enden, beispielsweise in ihrem mittigen mit der Aussparung 15 zusammenfallenden Bereich, eine senkrecht zum Scharniergelenk 6 hin ausgerichtete Aussparung 19 auf, die es ermöglicht, den Ascherkasten 2 gegen die Kraft der Federn 11 anzuheben, wenn die mit einem verdickten Kopf versehenen Gleitnocken 18 sich in Höhe der Aussparungen 19 befinden. Durch diese konstruktive Massnahme ist also sichergestellt, dass der Ascherkasten 2 nur in einer ganz bestimmten Kippstellung, in der die Gleitnocken 18 in die Aussparungen 19 einzutauchen vermögen, aus seiner das Scharniergelenk 6 bildenden Verhakung gelöst und aus dem Aschergehäuse 1 herausgenommen werden kann, wie dies durch Fig. 2 verdeutlicht ist.

Damit sich die unter Vorspannung stehenden Federn 11 bei aus dem Aschergehäuse 1 herausgenommenen Ascherkasten 2 nicht zu weit in das Aschergehäuse 1 hinein entspannen und damit das Wiedereinsetzen des Ascherkastens behindern können, sind die Seitenwände des Aschergehäuses 1 mit ins Gehäuseinnere hineinragende Widerlager 21, auf die sich die Federn 11 abstützen können, ausgerüstet.

Die an jeweils einem Ende der Gleitbahnen 17 angeformten Endanschläge 20 sind insofern wichtig, als sie auch ein gewaltsames Herausreissen des Ascherkastens 2 aus dem Aschergehäuse 1 zuverlässig verhindern.

### Patentansprüche

1. Kippascher, insbesondere für Fahrzeuge, bestehend aus einem eine frontseitige Öffnung (3) aufweisenden Aschergehäuse (1) und einem Ascherkasten (2), der über eine ein Scharniergelenk (6) bildende Verhakung lösbar an dem Aschergehäuse (1) angelenkt ist und durch zumindest eine in Richtung des Scharniergelenks (6) wirkende Feder (11), die auf einer kopfseitig am Ascherkasten (2) befindlichen, dem Schwenkradius des Ascherkastens (2) entsprechend bogenförmig ausgebildeten Gleitbahn (10) aufliegt, belastet ist, dadurch gekennzeichnet, dass zwischen zumindest einer Seitenwand des Aschergehäuses (1) und der dieser benachbarten Seitenwand (9) des Ascherkastens (2) eine Führungseinrichtung angeordnet ist, welche aus einer konzentrisch zur Gleitbahn (10) angeordneten weiteren Gleitbahn (17) und einem darauf geführten Gleitnocken (18) besteht, wobei diese wahlweise am Aschergehäuse (1) oder am Ascherkasten (2) angeordnete weitere Gleitbahn (17) zwischen ihren Enden eine eine Aufnahme des Gleitnockens (18) entgegen der Kraft der Feder (11) ermöglichende radial ausgerichtete Aussparung (19) aufweist.

2. Kippascher nach Anspruch 1, dadurch gekennzeichnet, dass die erste Gleitbahn (10) zwischen ihren Enden eine ein lösbares Einrasten der Feder (11) ermöglichende radiale Aussparung (15) für die Begrenzung einer Zwischenöffnungsweite des Ascherkastens (2) aufweist.

3. Kippascher nach Anspruch 1 und/oder 2, dadurch gekennzeichnet, dass der Ascherkasten (2) vorzugsweise an seinen beiden Seitenwänden (9) eine weitere Gleitbahn (17) aufweist, während das Aschergehäuse (1) mit zwei Gleitnocken (18) ausgebildet ist.

4. Kippascher nach einem oder mehreren der Ansprüche 1 bis 3, dadurch gekennzeichnet, dass die weitere Gleitbahn (17) einendig einen unüberwindbaren Endanschlag (20) für die Begrenzung der grössten Öffnungsweite des Ascherkastens (2) aufweist.

### Claims

1. A tiltable ash-tray, particularly for a vehicle, comprising an outer casing (1) having an aperture (3) in its front wall, and also comprising a container (2) pivotally yet removably attached to the casing (1) by a hooking-on joint functioning as a hinge (6), the container being biased towards the hinge (6) by at least one spring (11) which rests on a first slideway (10) located on the top of the container (2) and being curved at a radius corresponding to the tilt radius of the container (2), characterized in that a guide mechanism is disposed between at least one side wall of the outer casing (1) and the container's (2) side wall (9) adjacent thereto, that the guide mechanism includes a second slideway (17) concentric with the first slideway (10) and a sliding cam (18) guided on the second one, and in that the second slideway (17) which is arranged either on the outer casing (1) or on the container (2) is formed between its two ends with a radially directed indentation (19) for receiving — when the container (2) on being lifted against the bias of the spring (11) is hooked off the hinge (6) — the sliding cam (18).

2. A tiltable ash-tray according to claim 1, characterized in that the first slideway (10) is formed between its two ends with a radially directed indentation (15) for the spring (11) to be removably clicked thereinto, and in that the indentation (15) defines an intermediate tilt position of the container (2).

3. A tiltable ash-tray according to claim 1 or claim 2, characterized in that each of the two side walls (9) of the container (2) is provided with a respective one of two second slideways (17), and in that the outer casing (1) is formed with two sliding cams (18).

4. A tiltable ash-tray according to any one or more of Claims 1 to 3, characterized in that one end portion of the, or each, second slideway (17) is formed with an insurmountable stop (20) defining the farthest tilt position for fully opening the container (2).

## Revendications

1. Cendrier basculant, en particulier pour véhicules, comprenant un boîtier (1) comportant une ouverture frontale (3) et un bac à cendres (2), articulé de façon amovible au boîtier (1) par un accrochage constituant une articulation de charnière (6) et soumis à l'action d'au moins un ressort (11) agissant en direction de l'articulation de charnière (6), placé sur une glissière (10) se trouvant vers la tête sur le bac (2), arquée selon le rayon de pivotement du bac (2), caractérisé en ce qu'un dispositif de guidage est placé entre au moins une paroi latérale du boîtier (1) et la paroi latérale (9) du bac (2) voisine de celle-ci, dispositif comprenant une autre glissière (17) concentrique par rapport à la glissière (10) et une came de glissement guidée sur elle, cette autre glissière (17), placée au choix sur le boîtier (1) ou sur le bac (2) comportant, entre ses extrémités, un évidement (19) radial permettant de recevoir la came de glissement (18) contre la force du ressort (11).

2. Cendrier basculant selon la revendication 1, caractérisé en ce que la première glissière (10) comporte entre ses extrémités un évidement radial (15) permettant un encliquetage amovible du ressort (11) pour limiter une ouverture intermédiaire du bac (2).

3. Cendrier basculant selon la revendication 1, et/ou 2, caractérisé en ce que le bac à cendres (2) comporte, de préférence sur ses deux parois latérales (9), une autre glissière (17), tandis que le boîtier (1) comporte deux cames de glissement (18).

4. Cendrier basculant selon une ou plusieurs des revendications 1 à 3, caractérisé en ce que l'autre glissière (17) comporte à une extrémité une butée terminale (20) infranchissable pour limiter l'ouverture maximale du bac (2).

Fig. 1

Fig. 2

Fig. 3